# EUROPÄISCHE PATENTSCHRIFT

(11) **EP 0 406 277 B1**
(45) Veröffentlichungstag und Bekanntmachung des Hinweises auf die Patenterteilung: **26.05.1993**
(21) Anmeldenummer: 89903698.2
(22) Anmeldetag: 25.03.1989
(51) Int. Cl.: H02M 3/337, H02M 7/538, H01F 35/00

(54) **SELBSTGEFÜHRTER GEGENTAKT-WECHSELRICHTER**
AUTOMATICALLY GUIDED PUSH-PULL INVERTER
PUSH-PULL A GUIDAGE AUTOMATIQUE

(30) Priorität: 26.03.1988 DE 3810431
(43) Veröffentlichungstag der Anmeldung: 09.01.1991
(73) Patentinhaber: ROBERT BOSCH GMBH, 70442 Stuttgart (DE)
(72) Erfinder: FERREIRA, J., A., Johannesburg 2000 (SA)
(86) Internationale Anmeldenummer: DE8900193
(87) Internationale Veröffentlichungsnummer: WO8909510

(56) Entgegenhaltungen:
- DE-B- 1 162 954
- FR-A- 2 582 166
- NASA Tech Brief NPO-13060, Fall 1976, Washington, W. T. Mclyman: " Feedback Arrangement for Regenerative Switches "

## Beschreibung

### Stand der Technik

Die Erfindung geht aus von einem Verfahren zum Betreiben von selbstgeführten Gegentakt-Wechselrichtern nach der Gattung des Hauptanspruchs. Ein Wechselrichter formt im allgemeinen eine Gleichspannung in eine Wechselspannung um, die mit einem Transformator auf gewünschte Spannungswerte umsetzbar ist. Bei Gegentakt-Wechselrichtern mit Transformator, insbesondere bei selbstgeführten Gegentakt-Wechselrichtern, führen eine Unsymmetrie in der Ansteuerung und/oder beispielsweise Bauelementestreuungen dazu, daß die am Ausgang des Transformators abgreifbare Wechselspannung nicht frei von Gleichkomponenten ist. Eine Gleichkomponente in der Spannung kann dazu führen, daß der Transformator unsymmetrisch beansprucht wird und sich dabei einseitig sättigt. Eine Sättigung ist zu vermeiden, weil sie zu einem starken Anstieg des Magnetisierungsstroms führt, der für den verwendeten Schalter eine Überbeanspruchung darstellt.

Aus dem Fachbuch "Schaltnetzteile in der Praxis" Vogel-Verlag, Würzburg, 1986, S. 165 ist es bekannt, den in einer Primärwicklung des Transformators fließenden Strom zu überwachen. Eine weitere Möglichkeit, die Sättigung zu verhindern, besteht in der Überwachung der Ausgangsspannung an einer Sekundärwicklung des Transformators.

Aus der DE-A 1 162 954 ist ein Wechselrichter zur Speisung von Leuchtstofflampengruppen bekannt, der eine Kombination von einer Selbsterregung mit einer Fremdsteuerung aufweist. Ein Ausgangstransformator trägt zwei Wicklungen, die jeweils zur Gewinnung einer Rückkopplungsspannung vorgesehen sind. Die beiden Wicklungen sind in Serie zu einer Sekundärwicklung eines Steuertransformators geschaltet. Die in diese Wicklungen induzierten Spannungen zur Selbsterregung sowie eine Fremderregungsspannung sind derart bemessen, daß der Wechselrichter erst durch die überlagerte Fremderregungsspannung voll ausgesteuert wird. Eine magnetische Kopplung des Steuertransformators mit dem Ausgangstransformator ist nicht vorgesehen.

Aus dem Dokument NASA Tech Brief, NPO-13060, Fall 1976, Washington, W.T. McLyman: "Feedback Arrangement for Regenerative Switches" ist es bekannt, einen in einem Schaltnetzteil vorgesehenen Steuertransformator mit zwei zusätzlichen Wicklungen auszustatten durch die ein Laststrom fließt, der von einem Ausgangstransformator an die mit Energie zu versorgende Last abgegeben wird. Die mit den Zusatzwicklungen realisierte Stromrückkopplung verhindert eine Sättigung des Ausgangstransformators. Eine magnetische Kopplung von Steuertransformator mit Ausgangstransformator ist nicht vorgesehen.

### Vorteile der Erfindung

Das erfindungsgemäße Verfahren weist den Vorteil auf, daß eine Sättigung des Ausgangstransformators von selbstgeführten Gegentakt-Wechselrichtern, die wenigstens einen Steuertransformator aufweisen, ohne zusätzliche Bauelemente verhindert wird. Erfindungsgemäß ist vorgesehen, den Steuertransformator mit dem Ausgangstransformator magnetisch zu koppeln.

Durch die in den Unteransprüchen aufgeführten Maßnahmen sind vorteilhafte Weiterbildungen und Verbesserungen des im Hauptanspruch angegebenen Verfahrens möglich.

Vorteilhaft ist es, wenn je ein Joch des Steuertransformators und des Ausgangstransformators aneinandergesetzt werden, wobei die magnetischen Flüsse in den gemeinsamen Jochen gleichgerichtet sind.

Ein besonderer Vorteil des erfindungsgemäßen Verfahrens liegt darin, daß ohne zusätzliche Bauelemente ein wirkungsvoller Schutz der verwendeten Schalter, die im allgemeinen als Bipolar- oder Feldeffekttransistoren ausgebildet sind, gegen Überstrom erreicht wird.

Das erfindungsgemäße Verfahren wird anhand der folgenden Beschreibung näher erläutert.

### Zeichnung

Figur 1 zeigt ein Schaltbild eines Gegentakt-Wechselrichters und
Figur 2 zeigt Zwei räumlich benachbarte Transformatoren.

### Beschreibung des Ausführungsbeispiels

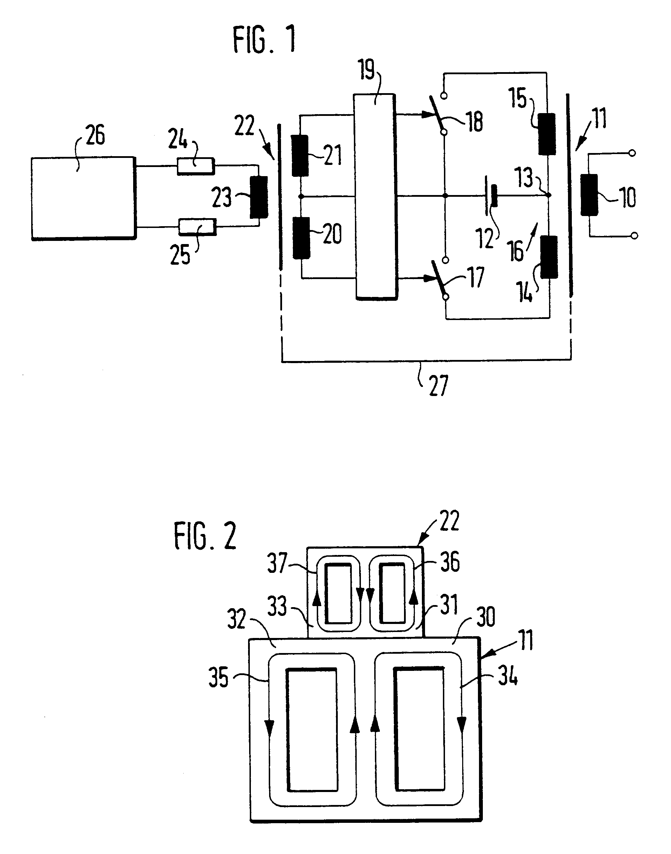

Figur 1 zeigt das Schaltbild eines Gegentakt-Wechselrichters, der als Zweipuls-Mittelpunktschaltung realisiert ist. An einer Sekundärwicklung 10 eines Ausgangstransformators 11 tritt eine annähernd rechteckförmige Wechselspannung auf. Als Energiequelle ist eine Gleichspannungsquelle 12, beispielweise eine Batterie, vorgesehen. Ein Anschluß der Batterie 12 liegt am Mittenabgriff 13 einer aus zwei Wicklungsteilen 14, 15 zusammengesetzten Primärwicklung 16 des Ausgangstransformators 11. Der andere Anschluß der Batterie 12 wird abwechselnd über Schalter 17, 18 mit dem ersten Primärwicklungsteil 15 bzw. dem zweiten Primärwicklungsteil 14 verbunden. Die Schalter 17, 18 sind vorzugsweise als Leistungs-Bipolar- oder Leistungs-Feldeffekt-Transistoren ausgebildet.

Die beiden Schalter 17, 18 werden über eine Treiberschaltung 19 angesteuert, die ihrerseits Eingangssignale von einem ersten und zweiten Sekundärwicklungsteil 20, 21 eines Steuertransformators 22 zugeführt erhält. Eine Primärwicklung 23 des Steuertransformators 22 ist über Widerstände 24, 25 mit einer Steuerschaltung 26 verbunden. Die Steuerschaltung 26 stellt in Verbindung mit den Widerständen 24, 25 und der Primärwicklung 23 des Steuertransformators 22 einen selbstschwingenden Generator dar, der die Frequenz der an der Sekundärwicklung 10 des Ausgangstransformators 11 abgreifbaren Wechselspannung festlegt. Eine unerwünschte Gleichkomponente in dieser Ausgangsspannung tritt nicht auf, wenn die beiden Schalter 17, 18 abwechselnd jeweils für die gleiche Zeitdauer eingeschaltet sind. In diesem Betriebsfall beträgt das Tastverhältnis, das die Einschaltdauer entweder des einen Schalters 17 oder des anderen Schalters 18 bezogen auf die Periodendauer der an der Sekundärwicklung 10 des Ausgangstransformators 11 abgreifbaren Wechselspannung angibt, genau 0,5. In diesem Betriebsfall wird auch der maximale Wirkungsgrad erreicht. Eine Abweichung des Wertes des Tastverhältnisses von 0,5, z.B. wegen einer Unsymmetrie in der Steuerschaltung 26 oder wegen einer Bauelementedrift, beispielsweise in der Treiberschaltung 19 oder bei den Schaltern 17, 18 führt zu einer Gleichstromvormagnetisierung des Ausgangstransformators 11, der dann unsymmetrisch beansprucht wird und der gegebenenfalls einseitig bis in die Sättigung gesteuert wird. Bei Erreichen der Sättigung sinkt die Induktivität und der in der Primär-Teilwicklung 15 oder in der Primär-Teilwicklung 14 fließende Strom steigt auf derart hohe Werte an, die zur Zerstörung der Schalter 17 bzw. 18 führen kann.

Anstelle der in Figur 1 gezeigten Zweipuls-Mittelpunktschaltung sind auch andere Schaltungsvarianten eines Gegentakt-Wechselrichters, beispielsweise eine Zweipuls-Brückenschaltung oder eine Zweipuls-Verdopplerschaltung, verwendbar. Wesentlich ist eine magnetische Kopplung des Ausgangstransformators 11 mit dem Steuertransformator 22, die in Figur 1 mit der Bezugszahl 27 eingetragen ist.

Ein Ausführungsbeispiel der magnetischen Kopplung 17 ist in Figur 2 gezeigt. Der Steuertransformator 22 und der Ausgangstransformator 11 werden räumlich benachbart angeordnet. Die beiden Transformatoren 11, 22 sind beispielsweise als M-I jeweils aus zwei E oder Topfkernen zusammengesetzt. Wählt man die Anordnung so, daß gleichsinnig durchflutete Joche 30, 31 bzw. 32, 33 des Ausgangstransformators 11 und des Steuertransformators 22 aufeinanderliegen, dann trägt der magnetische Fluß 34, 35 in den Jochen 30, 32 des Ausgangstransformators 11 zu einer Vormagnetisierung 36, 37 in den Jochen 31, 33 des Steuertransformators 22 bei. Bei einer Unsymmetrie des magnetischen Flusses 34, 35 im Ausgangstransformator 11 ergibt sich auch eine Unsymmetrie in der Vormagnetisierung des Steuertransformators 22, die dazu heranziehbar ist, daß bei der Ansteuerung des Ausgangstransformators 11 der Unsymmetrie entgegengewirkt wird.

Die durch Unsymmetrie hervorgerufene Vormagnetisierung des Steuertransformators 22 führt zu einem Anstieg des Magnetisierungsstroms in der Primärwicklung 23, insbesondere dann, wenn der Steuertransformator 22 im störungsfreien Normalbetrieb in der Nähe der Sättigung oder bereits in Sättigung arbeitet. Die Stromerhöhung führt an den Widerständen 24, 25 zu einem Spannungsabfall, der eine Reduzierung der in der Sekundär-Teilwicklung 20 oder in der Sekundär-Teilwicklung 21 induzierten Spannung zur Folge hat. Der Spannungsabfall verursacht eine Reduzierung des durch den Schalter 17 oder des durch den Schalter 18 fließenden Stroms, indem beispielsweise die AnSteuerspannung abgesenkt wird.

Die magnetische Gegenkopplung 27 bewirkt eine elektrische Gegenkopplung, die zu einem stabilen Arbeiten bei maximaler Leistung ohne die Gefahr einer Sättigung des Ausgangstransformators 11 führt.

## Patentansprüche

1. Verfahren zum Betreiben von selbstgeführten Gegentakt-Wechselrichtern mit wenigstens einem Ausgangstransformator (11) und mit wenigstens einem Steuertransformator (22), dadurch gekennzeichnet, daß der Ausgangstransformator (11) mit dem Steuertransformator (22) magnetisch gekoppelt wird, in der Art, daß ein Flußanstieg im Ausgangstransformator (11) den magnetischen Fluß im Steuertransformator (22) so verändert, daß dem Flußanstieg im Ausgangstransformator (11) entgegengewirkt wird.

2. Verfahren nach Anspruch 1, dadurch gekennzeichnet, daß jeweils ein Joch (30, 32) des Ausgangstransformators (11) und ein Joch (31, 33) des Steuertransformators (22) aneinandergesetzt werden.

3. Verfahren nach Anspruch 2, dadurch gekennzeichnet, daß die magnetischen Flüsse (34, 35, 36, 37) in den beiden Transformatoren (11, 22) in den aneinandergrenzenden Jochen (30, 31; 32, 33) gleichgerichtet sind.

## Claims

1. Method of operating self-commutated push-pull inverters having at least one output transformer (11) and at least one control-power transformer (22), characterised in that the output transformer (11) is magnetically coupled to the control-power transformer (22).

2. Method according to Claim 1, characterised in that in each case a yoke (30, 32) of the output transformer (11) and a yoke (31, 33) of the control-power transformer (22) are placed one on another.

3. Method according to Claim 2, characterised in that the magnetic fluxes (34, 35, 36, 37) in the two transformers (11, 22) are rectified in the adjoining yokes (30, 31; 32, 33).

## Revendications

1. Procédé de mise en oeuvre d'un redresseur en montage push-pull, avec au moins un transformateur de sortie (11) et au moins un transformateur de commande (22), procédé caractérisé en ce que le transformateur de sortie (11) est couplé magnétiquement avec le transformateur de commande (22).

2. Procédé selon la revendication 1, caractérisé en ce qu'on juxtapose chaque fois une culasse (30, 32) du transformateur de sortie (11) et une culasse (31, 33) du transformateur de commande (22).

3. Procédé selon la revendication 2, caractérisé en ce que les flux magnétiques (34, 35, 36, 37) dans les culasses adjacentes (30, 31 ; 32; 33) des deux transformateurs (11, 22) sont dirigés dans le même sens.
